# EUROPEAN PATENT SPECIFICATION

(11) **EP 4 603 726 B1**
(45) Date of publication and mention of the grant of the patent: **29.07.2026**
(21) Application number: 24157223.9
(22) Date of filing: 13.02.2024
(51) Int. Cl.: F02B 29/00, F02B 67/10, F02B 77/10, F02M 21/02, F16J 15/18, F16J 15/00, F02B 25/02, F16J 7/00, F16J 15/40, F16J 15/56

(54) **SEALING ARRANGEMENT**
DICHTUNGSANORDNUNG
DISPOSITIF D'ÉTANCHÉITÉ

(43) Date of publication of application: 20.08.2025
(73) Proprietor: WinGD Ltd., 8400 Winterthur (CH)
(72) Inventor: AFFOLTER, Samuel, 8248 Uhwiesen (CH); GRAF, Michal, 8408 Winterthur (CH); ROZMYSLOWICZ, Bartosz, 8413 Neftenbach (CH)
(74) Representative: Hepp Wenger Ryffel AG

(56) References cited:
- EP-A1- 3 825 555
- KR-B1- 101 886 960
- US-A- 4 469 017

## Description

The invention concerns a sealing arrangement for a reciprocating piston rod of an internal combustion engine, an internal combustion engine and a method for operating an internal combustion engine.

The present invention particularly is related to combustion engines which use ammonia or methanol or any other toxic or harmful fuel as a fuel.

The present invention preferably relates to an internal combustion engine like a large marine or ship engine or a stationary engine whose cylinders have an inner diameter of at least 200 mm.

The engine preferably is a two-stroke engine or a two-stroke cross head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally flushed two-stroke engine.

The term internal combustion engine also refers to large engines which can be operated not only in diesel mode, which is characterized by the self-ignition of the fuel, but also in Otto mode, which is characterized by the positive ignition of the fuel, or in mixtures of the two. Furthermore, the term internal combustion engine includes in particular dual-fuel engines and large engines in which a main fuel is ignited with the help of a pilot injection of a self-igniting fuel or alternatively with the adoption of a pre-chamber solution.

Engine speed is preferably below 800 RPM, and more preferably below 200 RPM, especially for 2-stroke engines, which indicates the designation of low-speed engines.

Fuel can be diesel or marine diesel oils or heavy fuel oils or emulsions or slurries or methanol or ethanol as well as gases like liquid natural gas (LNG) liquid petrol gas (LPG) and so on.

Further possible fuels which might be added on request are: LBG (Liquefied Biogas), Biological Fuels (e. g. Oil made from algae), Hydrogen, Synthetic fuels from CO2 (e. g. made by Power-To-Gas or Power-To-Liquid).

Ammonia-fuelled ships are increasingly being developed and built, or engines adapted to be driven by ammonia-fuel, following a 2018 International Maritime Organisation commitment to cut International shipping's greenhouse gas emissions.

Ammonia is a synthetic product obtained from fossil fuels, biomass, or renewable sources (wind, solar, hydro, or thermal), and when generated by renewable sources, ammonia will have virtually no carbon footprint or emit any CO2, SOX, particulate matter, or unburned hydrocarbons when combusted. However, a pilot injection, for example of a diesel fuel, might be necessary.

The same holds for other hazardous fuels.

When the fuel is ammonia, it is desirable to minimise emissions of ammonia gas because ammonia is hazardous and has a pungent smell. This is particularly for crew safety, and when an engine stops due to a change to conventional fuel or due to an unexpected event.

Blow-by in piston engines is a phenomenon, where gases from the combustion chambers flow past the piston rings to the piston underside and also might get into the crankcase. The gases comprise both exhaust gas and unburnt gaseous fuel.

Fuel dissolved in or absorbed by the cylinder oil might also get to the piston underside and to the crankcase together with the cylinder oil.

Typically, the amount of the blow-by gases is small, but accumulation of the gases in the crankcase and, in particular, absorption of them by the crankcase oil, also called system oil, needs to be prevented. The crankcase oil or system oil generally is part of the hydraulic system of the engine. Thus, pollution of the system oil shall be avoided.

Blow-by can be reduced by providing a stuffing box. Especially, in a longitudinally scavenged cross head engine the stuffing box may prevent the blow-by gases reaching the crank case.

According to GB1387255 a chamber surrounding the crank shaft external to the crank case may be filled with oil and may be connected to an oil pump.

US 9,027,934 B2 teaches a packing ring having a recess and sealing elements positioned within said recess, a first fluid line connected to said recess and a pump connected to said fluid line for delivering sealing medium to said recess, for biasing the sealing elements to axial ends of the recess and moving the sealing elements radially inwardly.

US 10,883,483b B2 discloses a seal assembly for a reciprocating rod of a reciprocating compressor, comprising a fluid passage which is operatively configured to vent a fluid leaking past a first packing.

Conventional packing rings and/or packing ring combinations always have a certain amount of leakage.

From WO2022258875 it is known to provide the crankcase with a ventilation system.

KR 101 886 960 B1 discloses a sealing arrangement according to the preamble of claim 1.

If, for example the engine is ammonia fuelled, even a small amount of blow-by gas reaching the crank case shall be prevented.

It is therefore an object of the present invention to prevent the drawbacks of the prior art and in particular to create a sealing arrangement, an internal combustion engine and a method for operating an internal combustion engine which reduce the amount of blow-by gas reaching the crank case.

The object is achieved by a sealing arrangement for a reciprocating piston rod of an internal combustion engine, an internal combustion engine, a method for operating an internal combustion engine and a computer program product according to the independent claims.

In an internal combustion engine, a piston moves up and down in a cylinder. The piston rod connects the piston and a crosshead. The sealing arrangement for a reciprocating piston rod of an internal combustion engine, preferably a two-stroke combustion engine, preferably being operable in a predetermined operation mode, in particular an ammonia fuelled mode, comprises a stuffing box.

The predetermined operation mode refers to a predetermined mode, where the engine is fuelled with a particularly hazardous fuel, for example ammonia, which shall not get into the crankcase.

The stuffing box has a first axial side which is disposed towards a cylinder and the piston underside and a second axial side which is disposed towards a crankcase.

The first axial side typically tends upwards, and the second axial side typically tends downwards. Hence, within this application "upper" means being disposed towards the piston underside and "lower" means being disposed towards the crankcase.

Within this context the terms "axial" and "circumferential" refer to the direction of the piston and/or piston rod axis.

The stuffing box comprises at least a first compartment comprising a first fluid-tight ring and a second compartment comprising a second fluid-tight ring.

Within this context a fluid-tight ring is a sealing ring which is for sealing of liquids, in particular oils, and gases.

The stuffing box preferably comprises at least two packing retainers. The packing retainers may each comprise at least one compartment, forming the first and the second compartment, being formed by annular grooves on the inner side of a housing of the stuffing box.

The inner side of a housing of the stuffing box is disposed towards the piston rod.

The packing retainers, preferably a first packing retainer, may additionally comprise further compartments which house at least one dirt scraper ring for removing residues from the piston rod during downward movement.

The packing retainers, preferably a second packing retainer, may additionally comprise further compartments which house at least one oil scraper ring for removing crankcase lubricating oil from the piston rod during the upwards movement.

Preferably the first packing retainer is arranged axially above the second packing retainer.

Within this application "axially above" means disposed more towards the cylinder and disposed less towards a crankcase.

The stuffing box comprises an annular rib configured to form a rib surface opposing and preferably being parallel to the surface of the reciprocating rod.

The annular rib is axially arranged between, and preferably next to, the first and the second compartment whereof each houses a fluid-tight ring.

Thus, the annular rib may form a radially and circumferentially extending wall of the first compartment and a radially and circumferentially extending wall of the second compartment. The annular rib may support the fluid-tight rings accommodated in the first and the second compartment.

The annular rib preferably is axially arranged between two packing retainers each comprising at least one compartment for accommodating a fluid-tight ring.

The sealing arrangement comprises at least one, preferably radially extending, fluid channel. Each fluid channel has a first end in fluid communication with the rib surface and/or in fluid communication with the first and/or the second compartment and a second end fluidly connected or connectable with a first source of pressurized air.

The axis of at least one fluid channel may include an angle of 90 degree with the main axis of the piston rod. The at least one fluid channel may also be inclined upwards or downwards.

The first end of the fluid channel may be formed by fluid openings circumferentially arranged on the inner side of the annular rib.

The first end of the fluid channel may be formed by fluid openings circumferentially arranged on the inner side of first and/or the second compartment.

Each fluid channel may be connected to at least one fluid opening. Fluid openings may be circumferentially arranged with respect to the piston rod.

The first end of at least one fluid channel may be connected to an annular fluid channel having circumferentially arranged fluid openings on the inner side of the annular rib and/or of the first and/or the second compartment.

The fluid channel may be connected to an annular groove forming an annular opening on the inner side of the annular rib.

Preferably, the main outlet axis of each fluid opening includes an angle of 90 degree with the main axis of the piston.

In case, the first end of at least one fluid channel is in fluid communication with the first and/or the second compartment, the first and/or the second compartment and/or the fluid-tight ring housed in the respective first and/or second compartment may comprise at least one radially extending groove.

Preferably, the radially extending groove is arranged in the lower wall of the first compartment or on the lower side of the fluid-tight ring arranged in the first compartment. Alternatively or additionally the radially extending groove may be arranged in the upper wall of the second compartment or on the upper side of the fluid-tight ring arranged in the second compartment. The radially extending groove provides for pressurized air reaching the space between the stuffing box and the piston rod.

The fluid channel provides for an air seal in the stuffing box.

The fluid channel provides for an enlarged pressure between the first and the second compartment. This pressure may push the gastight ring housed in the first compartment upwards and inwards and may push the fluid-tight ring in the second compartment downwards and inwards. This way, the pressurized air supplied by the fluid channel enhances the sealing capacity of the fluid-tight rings.

Preferably, sealing air with a pressure at least marginally exceeding the maximum operational pressure in the piston underside may be provided via the fluid channel. This air pressure may reduce the amount of cylinder lube oil (CLO) carried down with the piston rod as well as may eliminate (nearly) completely the gas flow from the piston underside towards the crankcase.

Thus, for example streams of ammonia escape from the piston underside into the crankcase may be significantly reduced or completely deflected from the crankcase.

Additionally or alternatively, the stuffing box comprises a second annular rib configured to form a second rib surface opposing and preferably being parallel to the surface of the reciprocating rod, wherein the annular rib comprises at least one, preferably radially extending, oil channel. Each oil channel has a first end in fluid communication with the second rib surface and a second end fluidly connected or connectable with a source of pressurized oil. Similar as described above for the sealing air, oil may be used to reduce and/or eliminate gas escape, in particular ammonia escape, into the crankcase.

Sealing oil deflected downwards (towards the crankcase) may be removed from the piston by additional scraper rings installed in the lower part of a stuffing box. The sealing oil may subsequently drained together with the cylinder lube oil removed from the rod through drainage holes into a waste oil handling system.

According to the invention, the stuffing box comprises at least one nozzle, preferably a plurality of circumferentially arranged nozzles, more preferably flat air nozzles, providing an air curtain with an axial width lower than a circumferential width. The at least one nozzle is fluidly connected or connectable with a second source of pressurized air.

In case plurality number of nozzles is used, all nozzles may be arranged circumferentially. All nozzles may be arranged in parallel in order to provide air on the whole circumference of the piston rod at the same time.

The at least one nozzle is arranged at the first axial side, that is the upper side, of the stuffing box, preferably on top of most upper compartment, and is adapted to provide an air curtain, preferably above the first axial side of the stuffing box. The at least one nozzle preferably is arranged such that the air curtain includes an angle (α) of less than 90°, more preferably of less than 45°, with the axial direction. The nozzle opening may have a main outlet direction which includes the angle (α) of less than 90°, more preferably of less than 45°, with the axial direction.

Within this context "air curtain" means that pressurized air is flowing and has a certain velocity to provide a force high enough to detach water/oil droplets from the surface of the piston rod.

The air curtain may be a, preferably quasi uniform, circumferential air curtain, for example formed by a plurality of circumferentially arranged nozzles. Hence, the resulting air curtain has a conical form.

The at least one nozzle may be arranged on one of the internal ribs of the stuffing box, preferably on the most upper.

Pressurized air may be guided into an annular chamber, for example arranged on or axially above the upper retainer. Pressurized air may be throttled through a ring nozzle or through a plurality of circumferentially arranged and preferably equally distanced nozzles. This primary air stream may adhere to a Coanda profile, which is directed to the piston rod. A low-pressure area may be created at the centre inducing a high-volume flow of surrounding air into the primary airstream. The pressure energy within the high-pressure gas is utilized to induce several times its own volume of air.

A conical ring of flowing air is created which is guided to the surface of the piston and which may wipe the entire surface with a high velocity air flow.

The at least one nozzle may be arranged axially above the upper retainer and may have a distance of a up to 50cm, preferably up to 20 cm, from the most upper compartment.

The at least one nozzle may also be arranged within the stuffing box, that is axially below the most upper rib, for example within a compartment which provides enough space to establish the air curtain and which comprises a pipe for leading away the flowing air and eventually lubricant which has been blown away and/or gas expelled from the lubricant.

Preferably the at least one nozzle is axially arranged above an annular rib comprising a fluid channel fluidly connected or connectable to a first source of pressurized air.

The air curtain may create an air knife, by which an oil film from the surface of the piston rod may be detached right before it enters the sealing gap to enable a further removal by edges of sealing rings.

The flowing pressurized air may blow away oil from the piston rod, before it reaches the stuffing box.

Furthermore, the air flow may expel gas, in particular may desorb ammonia, from the lubricant.

The air knife provides for holding back ammonia and/or ammonia loaded oil on the upper side of the stuffing box.

The sealing arrangement may comprise a first source and/or a second source of pressurized air, which preferably is adapted to provide a pressure exceeding the maximum operational pressure on the piston underside.

The second source of pressurized air may be adapted to provide a pressure to overcome surface tension of the oil film, that is to overcome the adhesion of the oil film to the rod surface.

The second source of pressurized air may be the same as the first source. The sealing arrangement may comprise a throttling device, e.g. a valve in a supply line, in order to control the flow rate towards the fluid channel and the nozzle.

The sealing arrangement may comprise a first air supply line fluidly arranged between the at least one fluid channel and the first source of pressurized air, preferably comprising at least one first pressure sensor.

Within this context "fluidly arranged" means that there is or there may be established a fluid-conducting connection, for example by opening a respective valve.

The sealing arrangement may comprise a second air supply line fluidly arranged between the at least one nozzle and the second source of pressurized air, preferably comprising at least one second pressure sensor.

The first and the second air supply line may merge into a common supply line which is connected to a source of pressurized air.

The sealing arrangement may comprise a third pressure sensor arranged axially above the stuffing box for providing data indicative for a pressure on a piston underside.

The sealing arrangement may comprise a differential pressure sensor measuring the pressure difference between the piston underside and the first air supply line and/or the second air supply line.

The sealing arrangement may comprise a first control unit which is adapted for setting the pressure of the air supplied by the first source of pressurized air based on data provided by the first pressure sensor arranged in the first air supply line, data provided by the third pressure sensor and/or data provided by the differential pressure sensor.

The sealing arrangement may comprise a second control unit, which is adapted for setting the pressure of air supplied by the second source of pressurized air based on data provided by the second pressure sensor arranged in the second air supply line and/or data provided by the third pressure sensor and/or data provided by the differential pressure sensor.

The second control unit may be a part of, may be integrated into, may comprise or may be the same as the first control unit.

The sealing arrangement may comprise a third control unit which is adapted for providing air supplied by the first source of pressurized air to the at least one fluid channel and/or the second source of pressurized air to the at least one nozzle
- only during expansion stroke,
   and/or
- only if the internal combustion engine is in a predetermined operation mode, for example when the internal combustion engine is ammonia fuelled.

Thus, the third control unit provides for timing the generation of an air seal and/or the air curtain. An unwanted surplus of air on the upper and/or lower side of the stuffing box as well as a waste of air consumption may be prevented. Sealing can be controlled in an effective manner, such that energy costs may be reduced.

In particular, the sealing arrangement comprises a first valve arranged in the first air supply line and/or a second valve in the second air supply line and the third control unit is adapted for setting the first valve and/or the second valve depending on the stroke direction and/or on the engine mode.

The second valve implemented in the second supply line may be set to cut-off the air supply during the compression stroke. This alone would reduce air consumption by order of 50%.

The third control unit may be a part of, may be integrated into, may comprise or may be the same as the first and/or the second control unit.

The first, the second and or the third control unit may be part of the engine control.

The opening of the at least one nozzle may be formed to provide an air curtain with a thickness of below 1mm at surface of the piston rod. With a small thickness of the air curtain a high pressure may be achieved, which provides for detaching the oil film from the piston.

The stuffing box may comprise an upper packing retainer comprising the first compartments and preferably having at least one further axially distanced annular upper compartment. At least one of the annular upper compartments, preferably the most upper compartment, may house at least one pre-scraper ring. The compartment may be formed by a groove open towards the inner side of the stuffing box and may hold two segmented dirt scraper rings to remove residues from piston rod in downward movement.

Scraper rings and sealing rings, in particular fluid-tight rings, may comprise and/or may be made of bronze. As bronze materials may be subject to corrosion in ammonia containing environments, bronze may be eliminated for ammonia fuelled engines and may for example be replaced by grey cast.

Oil scraper rings may comprise grey cast iron lips.

At least one of the annular upper compartments houses at least one fluid-tight ring, to separate the different pressure levels above and below the stuffing box.

The stuffing box may comprise a lower packing retainer comprising the second compartment and preferably having further, preferably four, axially distanced annular lower compartments.

At least one lower compartment, preferably the most upper lower compartment, houses at least one fluid-tight ring to separate the different pressure levels above and below the stuffing box.

Preferably at least two of the further lower compartments each house at least one oil scraper ring. At least one of the further lower compartments housing an oil scraper ring, preferably the most upper of the further lower compartments, may be fluidly connected to the crankcase by axial drainage bores in the stuffing box housing to drain back scrapped-off system oil. Preferably the lower packing retainer has four grooves with segmented oil scraper rings to remove crankcase lubricating oil from the piston rod during the upwards movement.

The annular rib may be arranged between the annular upper compartment housing a fluid-tight ring and the most upper lower compartment also housing a fluid-tight ring.

At least one lower and/or at least on upper compartment may be connected to a dirt drain.

The stuffing box may comprise a two-part housing, for example made of grey cast, which may be dismantled to the piston underside as well as to the crankcase side. The stuffing box may comprise screws, in particular M16x100 screws, for fixation of the parts of the housing to each other and for fixation to the cylinder jacker. The screws may be secured with locking plates.

A spring dowel pin, in particular a 12x45 spring dowel pin, may be pressed in the stuffing box, preferably in a support ring, for positioning and orienting the stuffing box during assembly.

Generally, dimensions of fixing elements may depend on engine size.

The object is also achieved by an internal combustion engine, having at least one cylinder, comprising a sealing arrangement as described above.

The internal combustion engine preferably is operable in a predetermined operation mode, in particular an ammonia fuelled mode.

The internal combustion engine preferably has at least one cylinder having an inner diameter of at least 200mm. A piston is provided in said cylinder for reciprocating between a bottom dead center and a top dead center.

The internal combustion engine may have a scavenging port formed in said cylinder for supplying scavenging gas into a combustion chamber that is a space enclosed by said cylinder and an upper surface of said piston.

The internal combustion engine may be a longitudinally flushed two-stroke engine, wherein the scavenging gas is introduced at the bottom of the cylinder via scavenging slots into the combustion chamber of the cylinder, while the piston is in the vicinity of his bottom dead center and clears the path for the scavenging gas into the combustion chamber of the cylinder.

The internal combustion engine may have an exhaust port formed in said cylinder, for example in the cylinder head, for exhausting gas out of said combustion chamber. The exhaust port comprises at least one exhaust valve.

The object is also achieved by a method for operating an internal combustion engine as described above.

The method comprises the steps of supplying pressurized air to the at least one fluid channel, such that a gas flow from the piston underside to the crankcase is reduced or prevented.

Additionally or alternatively, pressurized air is supplied to the nozzle, thereby producing an air curtain which detaches the oil film from the surface of the piston rod before it enters a sealing gap between the stuffing box and the piston rod.

Additionally or alternatively, oil is supplied to at least one fluid channel arranged in a circumferential rib of the stuffing box, such that a gas flow from the piston underside to the crankcase is reduced or prevented.

Pressurized air may be supplied only during an expansion stroke and/or when the internal combustion engine is in a predetermined operation mode, for example when the internal combustion engine is in a predetermined operation mode, in particular an ammonia fuelled mode.

The pressure of the supplied pressurized air may be higher than the pressure at piston underside.

In the following, the invention is further explained in embodiments by means of the following figures:
- Figure 1:: shows a schematic view of an example of an internal combustion engine;
- Figure 2:: shows a schematic view of a first example of a sealing arrangement;
- Figure 3:: shows a schematic view of a second example of a sealing arrangement;
- Figure 4:: shows a schematic view of a third example of a sealing arrangement;
- Figure 5:: shows a perspective view of an example of a fluid tight ring;
- Figure 6:: shows a schematic view of an air curtain.

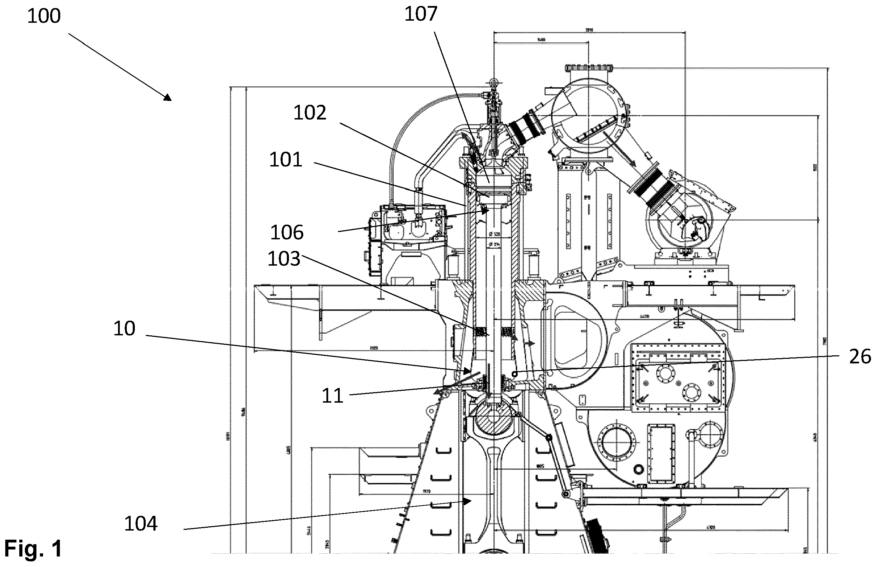

Figure 1 shows a schematic view of an example of an internal combustion engine 100, in this example a longitudinally flushed two-stroke engine. The internal combustion engine 100 comprises a piston 102 reciprocating in a cylinder 101. The piston 102 is connected to a piston rod 103.

Gases from the combustion chamber 107 might flow past the piston rings to the piston underside 106 and also might get into the crankcase 104, such that operators might be exposed to the gas.

A sealing arrangement 10 comprising a stuffing box 11 might prevent unburned fuel and exhaust gases from entering the crankcase 104.

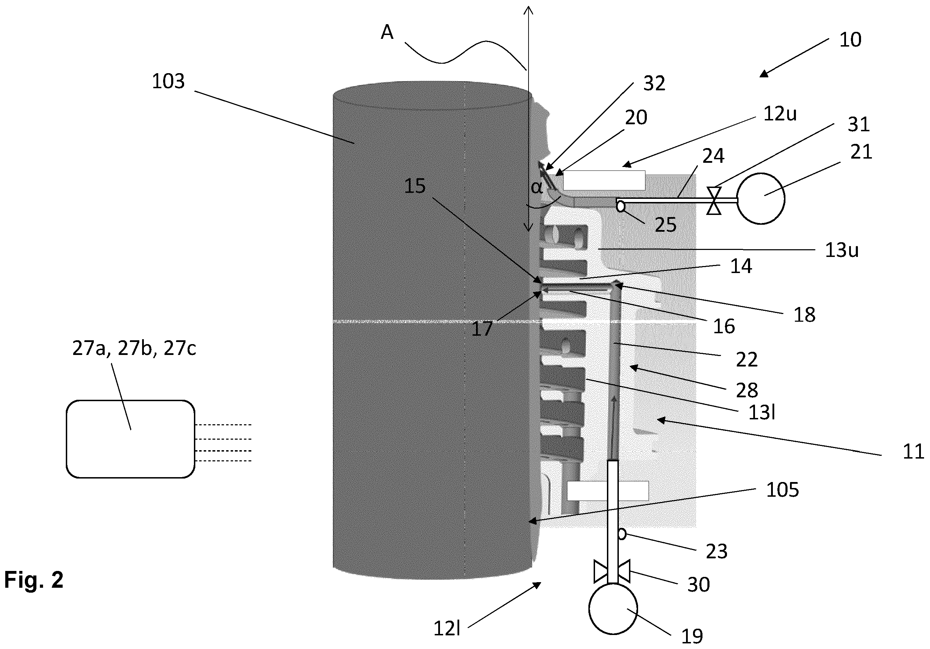

Figure 2 shows a schematic view of a first example of a sealing arrangement 10. The sealing arrangement 10 comprises a stuffing box 11 having a first axial side 12u which is disposed towards the piston underside 106 (see figure 1) and a second axial side 12l which is disposed towards the crankcase 104. The stuffing box 11 comprises upper packing retainers 13u and lower packing retainers 13l.

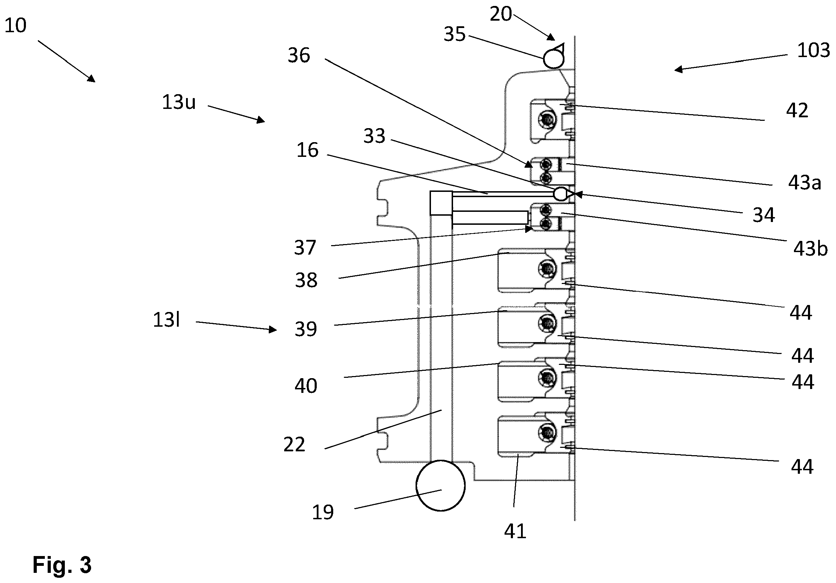

Fluid-tight rings 43a, 43b dirt scraper rings 42 and oil scraper rings 44 which are accommodated in compartments 36-41 (see figure 3) of the packing retainers 13u, 13l are omitted in this figure.

An annular rib 14 is arranged between the upper packing retainers 13u and lower packing retainers 13l. The rib 14 is configured to form a rib surface 15 opposing and being parallel to the surface 105 of the reciprocating rod 103.

The annular rib 14 comprises a radially extending fluid channel 16. The fluid channel 16 has a first end 17 which is in fluid communication with the rib surface 15 and a second end 18 fluidly connectable with a first source 19 of pressurized air.

The second end 18 is fluidly connected with a first air supply line 22, which comprises a first valve 30. By way of a first control unit 27a, the first valve 30 may be set, for example to provide a predetermined air pressure and/or to open only during an expansion stroke and/or only when the internal combustion engine 100 is in an operational mode, wherein hazardous gas may reach the crank case 14.

When the first valve 30 is open, pressurized air is pressed through the fluid channel 14 towards the piston rod 103. This provides for a gas sealing.

The sealing arrangement 10 further comprises a plurality of circumferentially arranged nozzles 20 which are arranged on top of the stuffing box 11.

The nozzles 20 are fluidly connectable with a second source 21 of pressurized air. The nozzles 20 are fluidly connected with a second air supply line 24, which comprises a second valve 31. By way of a second control unit 27b, integrated in the first control unit 27a, the second valve 31 may be set, for example to open only during an expansion stroke and/or only when the internal combustion engine 100 in an operational mode, wherein hazardous gas may reach the crank case 14.

The nozzles 20 are adapted to provide an annular air curtain 32 above the first axial side 12u of the stuffing box 11.

The air curtain 32 has a conical form and includes an angle α of less than 90°, with the axial direction A.

A pressure sensor 23 is arranged in the first air supply line 22, a further pressure sensor 25 is arranged in the second air supply line 24 and additionally a pressure sensor 26 (see figure 1) is arranged above the stuffing box 11.

The control units 27a, 27b may set the pressure of the supplied pressurized air depending on the pressure difference between the pressure at the piston underside 106 and the pressure of the respective air supply line 22, 24.

A third control unit 27c, also being integrated in the first control unit 27a, is adapted for setting the first valve 30 and/or the second valve 31 depending on the stroke direction and/or on the engine mode.

Figure 3 shows a schematic view of a second example of a sealing arrangement 10, which is similar to the first example shown in figure 2, which basically only shows a section through the empty stuffing box housing 28.

A radially extending fluid channel 16 (see figure 2, not shown in figure 3) is connected to a circumferential ring space 33, having openings 34 which allow guiding pressurized air towards the piston rod 103.

The second air supply line 24 (see figure 2, not shown in figure 3) is connected to a circumferential ring pipe 35 comprising circumferentially arranged nozzles 20 for providing an air curtain 32 (see figure 2, not shown in figure 3).

The upper packing retainer 13u comprises a first compartment 36 which house a first fluid-tight ring 43a. The upper packing retainer 13u comprises a further compartment, arranged above the first compartment 36, housing dirt scraper rings 42.

Dirt scraper rings 42 are provided to remove residues from the surface of the piston rod 103 during downward movement.

The lower packing retainer 13 l comprises five compartments 37, 38, 39, 40, 41 axially aligned, whereof the must upper second compartment 37 comprises a second fluid-tight ring 43b and the third compartment 38, the fourth compartment 39, the fifth compartment 40 and the sixth compartment 41 each comprise at least one oil scraper ring 44.

Oil scraper rings 44 are provided to remove crankcase lubricating oil from the surface of the piston rod 103 during the upwards movement.

The lower packing retainer 13l may comprise more or less than four compartments, wherein each compartment houses at least one oil scraper ring 44, preferably two oil scraper rings 44.

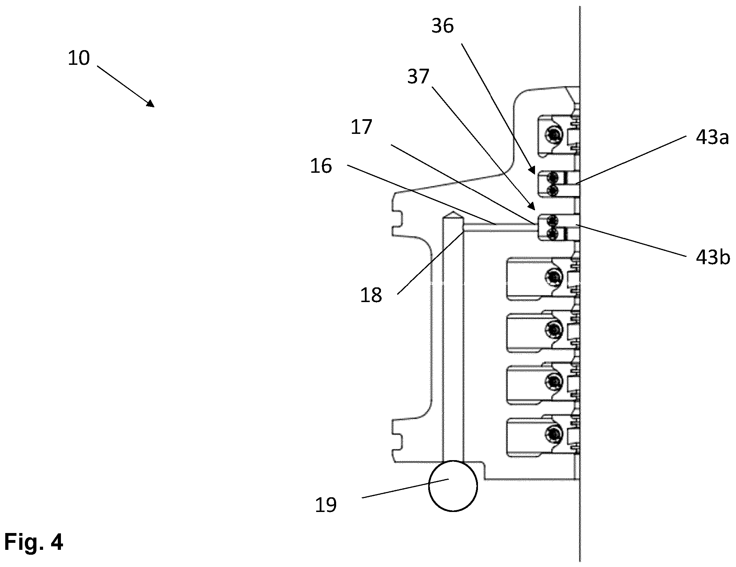

Figure 4 shows a schematic view of a third example of a sealing arrangement 10, which is similar to the second example shown in figure 3.

In this example the sealing arrangement 10 comprising a radially extending fluid channel 16 having a first end 17 in fluid communication with the second compartment 37 and a second end 18 fluidly connected or connectable with a first source 19 of pressurized air 8.

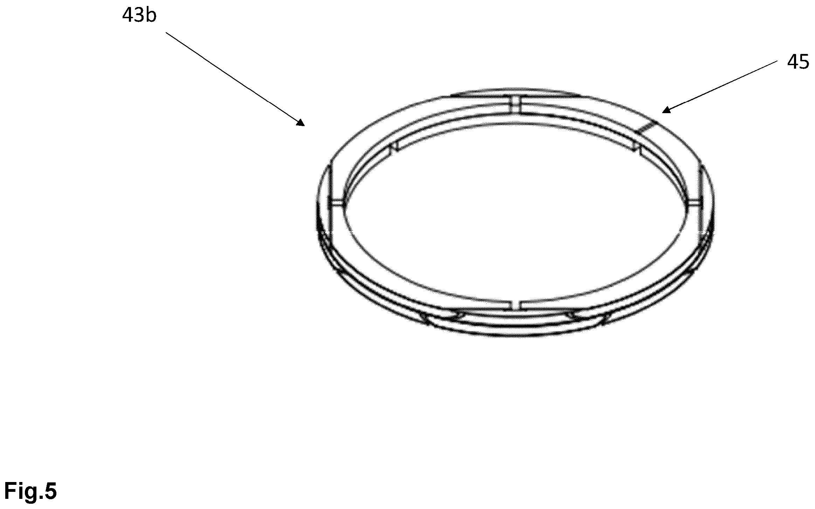

The second compartment 37 houses a second fluid tight ring 43b having a radially extending groove 45 on the upper wall as shown in figure 5.

Figure 5 shows a perspective view of an example of a second fluid tight ring 43b. The fluid tight ring 43b comprises at least one, preferably one, radially extending groove 45 which is in fluid communication with the fluid channel 16 as shown in figure 4.

In a preferred execution the radially extending groove may be 0.25mm deep and 1.7mm wide but may of course vary in dimension depending on engine size, sealing air pressure and acceptable sealing air consumption.

The fluid channel 16 (see figure 4) and the radially extending groove 45 provide for an air seal between the stuffing box 11 and the piston rod 103 (see figure 2). Additionally, the second fluid tight ring 43b in the second compartment 37 (see figure 4) may be pressed downwards by the pressurized air, which may enhance the sealing efficiency.

Alternatively or additionally, the first end 17 of the fluid channel 16 (see figure 4) may be in fluid communication with the first compartment 36 and the respective first fluid tight ring 43a may have a radially extending groove 45 on the lower wall (not shown in the figures). In this case, the first fluid tight ring 43a in the first compartment 36 (see figure 4) may be pressed upwards, which may also or further enhance the sealing efficiency.

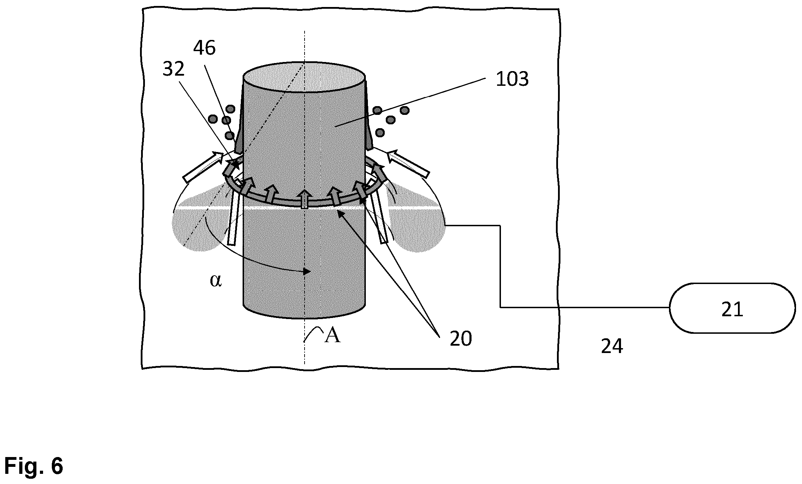

Figure 6 shows a schematic view of an air curtain 32, which is provided by pressurized air from a second source of pressurized air 21 and which is guided to the piston rod 103 by a plurality of circumferentially arranged nozzles 22.

Combustion residues 46 may be collected on the surface of the piston rod 103, which can be peeled off by the air curtain 32 during downward movement of the piston rod 103. The air curtain 32 forms an air knife as it includes an angle α with the axis A of the piston rod, which is smaller than 90°.

## Claims

1. Sealing arrangement (10) for a reciprocating piston rod (103) of an internal combustion engine (100), preferably a two-stroke combustion engine, preferably being operable in a predetermined operation mode, in particular an ammonia fuelled mode,
comprising a stuffing box (11) having a first axial side (12u) which, in use, is disposed towards a cylinder (101) and a second axial side (12l) which, in use, is disposed towards a crankcase (104),
the stuffing box comprising at least a first compartment (36) comprising a first fluid-tight ring (43a) and a second compartment (37) comprising a second fluid-tight ring (43b),
**characterized in that** the stuffing box (11) comprises
- at least one nozzle (20), preferably a plurality of circumferentially arranged nozzles (20), arranged at the first axial side (12u) of the stuffing box (11), fluidly connected or connectable with a second source (21) of pressurized air, which nozzle (20) is adapted to provide a, preferably annular, air curtain (32) above the first axial side (12u) of the stuffing box (11), preferably including an angle (α) of less than 90°, more preferably of less than 45° with the axial direction (A), to detach water/oil droplets from the surface of the piston rod.

2. Sealing arrangement according to claim 1, wherein the stuffing box (11) comprises
an annular rib (14) configured to form a rib surface (15) opposing and preferably being parallel to the surface (105) of the reciprocating rod (103), axially arranged between the first compartment (36) and the second compartment (37), the sealing arrangement (10) comprising at least one, preferably radially extending, fluid channel (16), each fluid channel (16) having a first end (17) in fluid communication with the rib surface (15) and/or in fluid communication with the first compartment (36) and/or with the second compartment (37), and a second end (18) fluidly connected or connectable with a first source (19) of pressurized air

3. Sealing arrangement according to any one of the preceding claims, wherein the second source (21) of pressurized air and/or the first source (19) of pressurized air, if any, is adapted to provide, during use, a pressure exceeding the maximum operational pressure on the piston underside (106).

4. Sealing arrangement according to claims 2 and 3, wherein the sealing arrangement comprises a first air supply line (22) fluidly arranged between the at least one fluid channel (16) and the first source (19) of pressurized air, preferably comprising at least one first pressure sensor (23).

5. Sealing arrangement according to any of the claims 3 to 4, wherein the sealing arrangement (10) comprises a second air supply line (24) fluidly arranged between the nozzle (20) and the second source of pressurized air (21), and preferably comprising at least one second pressure sensor (25).

6. Sealing arrangement according to any one of the preceding claims, wherein the sealing arrangement (10) comprises a third pressure sensor (26) arranged axially above the stuffing box (11) for providing data indicative for a pressure on a piston underside (106).

7. Sealing arrangement according to claims 4 and 6, wherein the sealing arrangement (10) comprises a first control unit (27a) which is adapted for setting the pressure of the air supplied by the first source (19) of pressurized air based on data provided by the first pressure sensor (23) arranged in the first air supply line (22) and data provided by the third pressure sensor (26).

8. Sealing arrangement according to claims 5 and 6, wherein the sealing arrangement (10) comprises a second control unit (27b), which is adapted for setting the pressure of air supplied by the second source (21) of pressurized air based on data provided by the second pressure sensor (25) arranged in the second air supply line (24) and data provided by the third pressure sensor (26).

9. Sealing arrangement according to any one of claims 3 to 8, wherein the sealing arrangement (10) comprises a third control unit (27c) which is adapted for providing air supplied by the first source of pressurized air (19) to the at least one fluid channel (16) and/or the second source (21) of pressurized air to the at least one nozzle (20), during use,
- only during an expansion stroke,
and/or
- only when the internal combustion engine is in a predetermined operation mode, in particular an ammonia fuelled mode,
and in particular wherein the sealing arrangement (10) comprises a first valve (30) arranged in the first air supply line (22) and/or a second valve (31) in the second air supply line (24) and wherein the third control unit (27c) is adapted for setting the first valve (30) and/or the second valve (31) depending on the stroke direction and/or on the predetermined operation mode.

10. Sealing arrangement according to any one of the preceding claims, wherein the stuffing box comprises an upper packing retainer (13u) comprising the first compartment (36) housing the first fluid tight ring (43a) and having at least one further axially distanced annular upper compartment, the at least one further annular upper compartment housing at least one pre-scraper ring,
and/or
wherein the stuffing box comprises a lower packing retainer (13l) comprising the second compartment (37) housing the second fluid tight ring (43b) and additionally having, preferably four, axially distanced annular lower compartments (38, 39, 40, 41), each annular lower compartment housing at least one oil scraper ring (44), and
preferably wherein at least one of the lower compartments (38, 39, 40, 41) houses an oil scraper ring, preferably being fluidly connected to drainage bores to drain back scrapped-off system oil.

11. Internal combustion engine (100), preferably being operable in a predetermined operation mode, in particular an ammonia fuelled mode, having at least one cylinder, preferably having an inner diameter of at least 200mm, comprising a sealing arrangement (10) according to any one of preceding claims.

12. Method for operating an internal combustion engine according to claim 11, wherein when the internal combustion engine (100) preferably is operated in the ammonia fuelled mode, comprising the steps of
- Supplying pressurized air to the at least one nozzle (20), thereby producing an air curtain (32) above the first axial side (12u) of the stuffing box (11) which detaches the oil film from the surface (105) of the piston rod (103) before it enters the sealing gap between the stuffing box (11) and the piston rod (103).

13. Method according to claim 12 for operating an internal combustion engine (100) comprising a sealing arrangement (10) according to claim 2 or any of claims 3 to 10 as dependent on claim 2, the method comprising the steps of
- Supplying pressurized air to the at least one, preferably radially extending, fluid channel (16), such that a gas flow from the piston underside (106) to the crankcase (104) is reduced or prevented.

14. Method according to any one of the claims 12 to 13, wherein pressurized air is only supplied during an expansion stroke and/or when the internal combustion engine (100) is in a predetermined operation mode, preferably in an ammonia fuelled mode.

15. Method according to any one of the claims 12 to 14, wherein the pressure of the supplied pressurized air is higher than the pressure at piston underside (106).

## Patentansprüche

1. Dichtungsanordnung (10) für eine hin- und hergehende Kolbenstange (103) einer Verbrennungskraftmaschine (100), vorzugsweise eines Zweitakt-Verbrennungsmotors, der vorzugsweise in einem vorbestimmten Betriebsmodus, insbesondere einem ammoniakbetriebenen Modus, betreibbar ist,
umfassend eine Stopfbuchse (11) mit einer ersten axialen Seite (12u), die im Gebrauch einem Zylinder (101) zugewandt ist, und einer zweiten axialen Seite (12l), die im Gebrauch einem Kurbelgehäuse (104) zugewandt ist,
wobei die Stopfbuchse mindestens eine erste Kammer (36), die einen ersten fluiddichten Ring (43a) umfasst, und eine zweite Kammer (37), die einen zweiten fluiddichten Ring (43b) umfasst, umfasst,
**dadurch gekennzeichnet, dass** die Stopfbuchse (11) Folgendes umfasst:
mindestens eine Düse (20), vorzugsweise eine Vielzahl von in Umfangsrichtung angeordneten Düsen (20), die an der ersten axialen Seite (12u) der Stopfbuchse (11) angeordnet ist, die mit einer zweiten Quelle (21) für Druckluft fluidisch verbunden oder verbindbar ist, wobei die Düse (20) dazu eingerichtet ist, einen, vorzugsweise ringförmigen, Luftvorhang (32) oberhalb der ersten axialen Seite (12u) der Stopfbuchse (11) bereitzustellen, der vorzugsweise einen Winkel (α) von weniger als 90°, besonders bevorzugt von weniger als 45° mit der axialen Richtung (A) einschliesst, um Wasser-/Öltröpfchen von der Oberfläche der Kolbenstange abzulösen.

2. Dichtungsanordnung nach Anspruch 1, wobei die Stopfbuchse (11) eine ringförmige Rippe (14) umfasst, die dazu ausgebildet ist, eine Rippenoberfläche (15) zu bilden, die der Oberfläche (105) der hin- und hergehenden Stange (103) gegenüberliegt und vorzugsweise parallel zu dieser ist, und die axial zwischen der ersten Kammer (36) und der zweiten Kammer (37) angeordnet ist,
wobei die Dichtungsanordnung (10) mindestens einen, sich vorzugsweise radial erstreckenden, Fluidkanal (16) umfasst, wobei jeder Fluidkanal (16) ein erstes Ende (17) in Fluidverbindung mit der Rippenoberfläche (15) und/oder in Fluidverbindung mit der ersten Kammer (36) und/oder mit der zweiten Kammer (37) und ein zweites Ende (18) aufweist, das mit einer ersten Quelle (19) für Druckluft fluidisch verbunden oder verbindbar ist.

3. Dichtungsanordnung nach einem der vorhergehenden Ansprüche, wobei die zweite Quelle (21) für Druckluft und/oder die erste Quelle (19) für Druckluft, falls vorhanden, dazu eingerichtet ist, während des Betriebs einen Druck bereitzustellen, der den maximalen Betriebsdruck an der Kolbenunterseite (106) übersteigt.

4. Dichtungsanordnung nach den Ansprüchen 2 und 3, wobei die Dichtungsanordnung eine erste Luftversorgungsleitung (22) umfasst, die fluidisch zwischen dem mindestens einen Fluidkanal (16) und der ersten Quelle (19) für Druckluft angeordnet ist und vorzugsweise mindestens einen ersten Drucksensor (23) umfasst.

5. Dichtungsanordnung nach einem der Ansprüche 3 bis 4, wobei die Dichtungsanordnung (10) eine zweite Luftversorgungsleitung (24) umfasst, die fluidisch zwischen der Düse (20) und der zweiten Quelle für Druckluft (21) angeordnet ist und vorzugsweise mindestens einen zweiten Drucksensor (25) umfasst.

6. Dichtungsanordnung nach einem der vorhergehenden Ansprüche, wobei die Dichtungsanordnung (10) einen dritten Drucksensor (26) umfasst, der axial oberhalb der Stopfbuchse (11) angeordnet ist, um Daten bereitzustellen, die für einen Druck an einer Kolbenunterseite (106) indikativ sind.

7. Dichtungsanordnung nach den Ansprüchen 4 und 6, wobei die Dichtungsanordnung (10) eine erste Steuereinheit (27a) umfasst, die dazu eingerichtet ist, den Druck der von der ersten Quelle (19) für Druckluft zugeführten Luft auf der Grundlage von Daten, die von dem in der ersten Luftversorgungsleitung (22) angeordneten ersten Drucksensor (23) bereitgestellt werden, und von Daten, die von dem dritten Drucksensor (26) bereitgestellt werden, einzustellen.

8. Dichtungsanordnung nach den Ansprüchen 5 und 6, wobei die Dichtungsanordnung (10) eine zweite Steuereinheit (27b) umfasst, die dazu eingerichtet ist, den Druck der von der zweiten Quelle (21) für Druckluft zugeführten Luft auf der Grundlage von Daten, die von dem in der zweiten Luftversorgungsleitung (24) angeordneten zweiten Drucksensor (25) bereitgestellt werden, und von Daten, die von dem dritten Drucksensor (26) bereitgestellt werden, einzustellen.

9. Dichtungsanordnung nach einem der Ansprüche 3 bis 8, wobei die Dichtungsanordnung (10) eine dritte Steuereinheit (27c) umfasst, die dazu eingerichtet ist, während des Betriebs Luft, die von der ersten Quelle für Druckluft (19) zugeführt wird, dem mindestens einen Fluidkanal (16) und/oder die zweite Quelle (21) für Druckluft der mindestens einen Düse (20) zuzuführen,
- nur während eines Arbeitshubs,
und/oder
- nur wenn sich die Verbrennungskraftmaschine in einem vorbestimmten Betriebsmodus, insbesondere einem ammoniakbetriebenen Modus, befindet,
und wobei insbesondere die Dichtungsanordnung (10) ein erstes Ventil (30), das in der ersten Luftversorgungsleitung (22) angeordnet ist, und/oder ein zweites Ventil (31) in der zweiten Luftversorgungsleitung (24) umfasst, und wobei die dritte Steuereinheit (27c) dazu eingerichtet ist, das erste Ventil (30) und/oder das zweite Ventil (31) in Abhängigkeit von der Hubrichtung und/oder von dem vorbestimmten Betriebsmodus einzustellen.

10. Dichtungsanordnung nach einem der vorhergehenden Ansprüche, wobei die Stopfbuchse einen oberen Dichtungshalter (13u) umfasst, der die erste Kammer (36) umfasst, die den ersten fluiddichten Ring (43a) aufnimmt, und der mindestens eine weitere axial beabstandete ringförmige obere Kammer aufweist, wobei die mindestens eine weitere ringförmige obere Kammer mindestens einen Vorabstreifring aufnimmt,
und/oder
wobei die Stopfbuchse einen unteren Dichtungshalter (13l) umfasst, der die zweite Kammer (37) umfasst, die den zweiten fluiddichten Ring (43b) aufnimmt, und zusätzlich, vorzugsweise vier, axial beabstandete ringförmige untere Kammern (38, 39, 40, 41) aufweist, wobei jede ringförmige untere Kammer mindestens einen Ölabstreifring (44) aufnimmt, und
wobei vorzugsweise mindestens eine der unteren Kammern (38, 39, 40, 41) einen Ölabstreifring aufnimmt, der vorzugsweise mit Drainagebohrungen fluidisch verbunden ist, um abgestreiftes Systemöl zurückzuführen.

11. Verbrennungskraftmaschine (100), die vorzugsweise in einem vorbestimmten Betriebsmodus, insbesondere einem ammoniakbetriebenen Modus, betreibbar ist, mit mindestens einem Zylinder, der vorzugsweise einen Innendurchmesser von mindestens 200 mm aufweist, umfassend eine Dichtungsanordnung (10) nach einem der vorhergehenden Ansprüche.

12. Verfahren zum Betreiben einer Verbrennungskraftmaschine nach Anspruch 11, wobei, wenn die Verbrennungskraftmaschine (100) vorzugsweise im ammoniakbetriebenen Modus betrieben wird, die folgenden Schritte umfasst werden:
∘ Zuführen von Druckluft zu der mindestens einen Düse (20), wodurch ein Luftvorhang (32) oberhalb der ersten axialen Seite (12u) der Stopfbuchse (11) erzeugt wird, der den Ölfilm von der Oberfläche (105) der Kolbenstange (103) ablöst, bevor er in den Dichtspalt zwischen der Stopfbuchse (11) und der Kolbenstange (103) eintritt.

13. Verfahren nach Anspruch 12 zum Betreiben einer Verbrennungskraftmaschine (100), die eine Dichtungsanordnung (10) nach Anspruch 2 oder einem der Ansprüche 3 bis 10 in Abhängigkeit von Anspruch 2 umfasst, wobei das Verfahren die folgenden Schritte umfasst:
∘ Zuführen von Druckluft zu dem mindestens einen, sich vorzugsweise radial erstreckenden, Fluidkanal (16), so dass ein Gasstrom von der Kolbenunterseite (106) zum Kurbelgehäuse (104) reduziert oder verhindert wird.

14. Verfahren nach einem der Ansprüche 12 bis 13, wobei Druckluft nur während eines Arbeitshubs und/oder wenn sich die Verbrennungskraftmaschine (100) in einem vorbestimmten Betriebsmodus, vorzugsweise in einem ammoniakbetriebenen Modus, befindet, zugeführt wird.

15. Verfahren nach einem der Ansprüche 12 bis 14, wobei der Druck der zugeführten Druckluft höher ist als der Druck an der Kolbenunterseite (106).

## Revendications

1. Agencement d'étanchéité (10) pour une tige de piston à mouvement alternatif (103) d'un moteur à combustion interne (100), de préférence un moteur à combustion à deux temps, de préférence pouvant fonctionner selon un mode de fonctionnement prédéterminé, en particulier un mode alimenté à l'ammoniac,
comprenant un presse-étoupe (11) ayant un premier côté axial (12u) qui, en utilisation, est disposé vers un cylindre (101) et un second côté axial (12l) qui, en utilisation, est disposé vers un carter (104),
le presse-étoupe comprenant au moins un premier compartiment (36) comprenant une première bague étanche aux fluides (43a) et un second compartiment (37) comprenant une seconde bague étanche aux fluides (43b),
**caractérisé en ce que** le presse-étoupe (11) comprend
au moins une buse (20), de préférence une pluralité de buses (20) agencées circonférentiellement, agencée au niveau du premier côté axial (12u) du presse-étoupe (11), reliée ou pouvant être reliée fluidiquement à une seconde source (21) d'air sous pression, laquelle buse (20) est adaptée pour fournir un rideau d'air (32), de préférence annulaire, au-dessus du premier côté axial (12u) du presse-étoupe (11), formant de préférence un angle (α) inférieur à 90°, plus préférablement inférieur à 45° avec la direction axiale (A), pour détacher des gouttelettes d'eau/d'huile de la surface de la tige de piston.

2. Agencement d'étanchéité selon la revendication 1, dans lequel le presse-étoupe (11) comprend une nervure annulaire (14) configurée pour former une surface de nervure (15) faisant face et étant de préférence parallèle à la surface (105) de la tige à mouvement alternatif (103), agencée axialement entre le premier compartiment (36) et le second compartiment (37), l'agencement d'étanchéité (10) comprenant au moins un canal de fluide (16), de préférence s'étendant radialement, chaque canal de fluide (16) ayant une première extrémité (17) en communication fluidique avec la surface de nervure (15) et/ou en communication fluidique avec le premier compartiment (36) et/ou avec le second compartiment (37), et une seconde extrémité (18) reliée ou pouvant être reliée fluidiquement à une première source (19) d'air sous pression.

3. Agencement d'étanchéité selon l'une quelconque des revendications précédentes, dans lequel la seconde source (21) d'air sous pression et/ou la première source (19) d'air sous pression, le cas échéant, est adaptée pour fournir, en utilisation, une pression dépassant la pression de fonctionnement maximale sur la face inférieure du piston (106).

4. Agencement d'étanchéité selon les revendications 2 et 3, dans lequel l'agencement d'étanchéité comprend une première conduite d'alimentation en air (22) agencée fluidiquement entre l'au moins un canal de fluide (16) et la première source (19) d'air sous pression, comprenant de préférence au moins un premier capteur de pression (23).

5. Agencement d'étanchéité selon l'une quelconque des revendications 3 à 4, dans lequel l'agencement d'étanchéité (10) comprend une seconde conduite d'alimentation en air (24) agencée fluidiquement entre la buse (20) et la seconde source d'air sous pression (21), et comprenant de préférence au moins un second capteur de pression (25).

6. Agencement d'étanchéité selon l'une quelconque des revendications précédentes, dans lequel l'agencement d'étanchéité (10) comprend un troisième capteur de pression (26) agencé axialement au-dessus du presse-étoupe (11) pour fournir des données indicatives d'une pression sur la face inférieure du piston (106).

7. Agencement d'étanchéité selon les revendications 4 et 6, dans lequel l'agencement d'étanchéité (10) comprend une première unité de commande (27a) qui est adaptée pour régler la pression de l'air fourni par la première source (19) d'air sous pression sur la base de données fournies par le premier capteur de pression (23) agencé dans la première conduite d'alimentation en air (22) et de données fournies par le troisième capteur de pression (26).

8. Agencement d'étanchéité selon les revendications 5 et 6, dans lequel l'agencement d'étanchéité (10) comprend une seconde unité de commande (27b), qui est adaptée pour régler la pression de l'air fourni par la seconde source (21) d'air sous pression sur la base de données fournies par le second capteur de pression (25) agencé dans la seconde conduite d'alimentation en air (24) et de données fournies par le troisième capteur de pression (26).

9. Agencement d'étanchéité selon l'une quelconque des revendications 3 à 8, dans lequel l'agencement d'étanchéité (10) comprend une troisième unité de commande (27c) qui est adaptée pour fournir de l'air fourni par la première source d'air sous pression (19) à l'au moins un canal de fluide (16) et/ou par la seconde source (21) d'air sous pression à l'au moins une buse (20), en utilisation,
- uniquement pendant une course de détente,
et/ou
- uniquement lorsque le moteur à combustion interne est dans un mode de fonctionnement prédéterminé, en particulier un mode alimenté à l'ammoniac,
et en particulier dans lequel l'agencement d'étanchéité (10) comprend une première vanne (30) agencée dans la première conduite d'alimentation en air (22) et/ou une seconde vanne (31) dans la seconde conduite d'alimentation en air (24) et dans lequel la troisième unité de commande (27c) est adaptée pour régler la première vanne (30) et/ou la seconde vanne (31) en fonction de la direction de la course et/ou du mode de fonctionnement prédéterminé.

10. Agencement d'étanchéité selon l'une quelconque des revendications précédentes, dans lequel le presse-étoupe comprend un dispositif de retenue de garniture supérieur (13u) comprenant le premier compartiment (36) logeant la première bague étanche aux fluides (43a) et ayant au moins un autre compartiment supérieur annulaire axialement distancé, l'au moins un autre compartiment supérieur annulaire logeant au moins une bague de pré-racleur,
et/ou
dans lequel le presse-étoupe comprend un dispositif de retenue de garniture inférieur (13l) comprenant le second compartiment (37) logeant la seconde bague étanche aux fluides (43b) et ayant en outre, de préférence quatre, compartiments inférieurs annulaires axialement distants (38, 39, 40, 41), chaque compartiment inférieur annulaire logeant au moins une bague racleuse d'huile (44), et
de préférence dans lequel au moins l'un des compartiments inférieurs (38, 39, 40, 41) loge une bague racleuse d'huile, étant de préférence reliée fluidiquement à des alésages de drainage pour ramener par drainage l'huile système raclée.

11. Moteur à combustion interne (100), pouvant de préférence fonctionner selon un mode de fonctionnement prédéterminé, en particulier un mode alimenté à l'ammoniac, ayant au moins un cylindre, ayant de préférence un diamètre intérieur d'au moins 200 mm, comprenant un agencement d'étanchéité (10) selon l'une quelconque des revendications précédentes.

12. Procédé de fonctionnement d'un moteur à combustion interne selon la revendication 11, dans lequel, lorsque le moteur à combustion interne (100) est de préférence mis en opération dans le mode alimenté à l'ammoniac, comprenant les étapes consistant à :
o Fournir de l'air sous pression à l'au moins une buse (20), produisant ainsi un rideau d'air (32) au-dessus du premier côté axial (12u) du presse-étoupe (11) qui détache le film d'huile de la surface (105) de la tige de piston (103) avant qu'il n'entre dans l'interstice d'étanchéité entre le presse-étoupe (11) et la tige de piston (103).

13. Procédé selon la revendication 12 pour le fonctionnement d'un moteur à combustion interne (100) comprenant un agencement d'étanchéité (10) selon la revendication 2 ou l'une quelconque des revendications 3 à 10 en tant que dépendante de la revendication 2, le procédé comprenant les étapes consistant à :
o Fournir de l'air sous pression à l'au moins un canal de fluide (16), de préférence s'étendant radialement, de sorte qu'un écoulement de gaz de la face inférieur du piston (106) vers le carter (104) est réduit ou empêché.

14. Procédé selon l'une quelconque des revendications 12 à 13, dans lequel l'air sous pression est fourni uniquement pendant une course de détente et/ou lorsque le moteur à combustion interne (100) est dans un mode de fonctionnement prédéterminé, de préférence dans un mode alimenté à l'ammoniac.

15. Procédé selon l'une quelconque des revendications 12 à 14, dans lequel la pression de l'air sous pression fourni est supérieure à la pression au niveau de la face inférieur du piston (106).
